# EUROPEAN PATENT APPLICATION

(11) **EP 4 435 936 A1**
(43) Date of publication of application: **25.09.2024**
(21) Application number: 23769810.5
(22) Date of filing: 14.03.2023
(51) Int. Cl.: H01M 50/10

(54) **EDGE BEAM USED FOR BATTERY TRAY, BATTERY TRAY, BATTERY PACK, AND VEHICLE**

(30) Priority: 14.03.2022 CN 202210249516
(71) Applicant: BYD Company Limited, Shenzhen, Guangdong 518118 (CN)
(72) Inventor: TANG, Jianglong, Shenzhen, Guangdong 518118 (CN); LI, Jianqiang, Shenzhen, Guangdong 518118 (CN); LIAO, Zhengyuan, Shenzhen, Guangdong 518118 (CN); WAN, Long, Shenzhen, Guangdong 518118 (CN); HE, Wei, Shenzhen, Guangdong 518118 (CN)
(74) Representative: Arnold & Siedsma
(86) International application number: PCT/CN2023/081447
(87) International publication number: WO 2023/174308

(57) **Abstract**

An edge beam (23) for a battery tray (100), a battery tray (100), a battery pack (200), and a vehicle (2000) are provided. The edge beam (23) includes an edge beam body (231). The edge beam body (231) defines a cavity (2311). The edge beam body (231) has a partition portion (232). The partition portion (232) is located in the cavity (2311). The partition portion (232) is connected between a top wall (233) and a bottom wall (234) of the cavity (2311) to partition the cavity (2311) into multiple sub-cavities (235). The multiple sub-cavities (235) are arranged in sequence in a width direction of the edge beam (23). In a direction from an upper end to a lower end of the edge beam (23), the partition portion (232) inclines away from the placement groove (111).

## Description

### CROSS-REFERENCE TO RELATED APPLICATIONS

The present disclosure claims priority to Chinese Patent Application No. 2022102495164, filed by BYD Co., Ltd. on March 14, 2022 and entitled "EDGE BEAM FOR BATTERY TRAY, BATTERY TRAY, BATTERY PACK, AND VEHICLE". The entire content of the above-referenced application is incorporated herein by reference.

### FIELD

The present disclosure relates to the field of batteries, and more specifically, to an edge beam for a battery tray, a battery tray, a battery pack, and a vehicle.

### BACKGROUND

In the related art, a battery pack includes a battery tray. The battery tray includes a side frame. The side frame includes an edge beam. The edge beam has insufficient structural strength and poor stability, which causes the edge beam to be easily deformed, and affects a service life of the edge beam. Moreover, when the edge beam is impacted, relatively large impact is transmitted into the battery pack, which results in a high risk of damaging a battery core inside the battery pack, and affects usage safety of the battery pack.

### SUMMARY

The present disclosure is intended to resolve at least one of technical problems existing in the related art. The present disclosure is intended to provide an edge beam for a battery tray. The edge beam for a battery tray has desirable structural strength, stiffness, and stability, and has a reduced deformation risk, so that service lives of the edge beam and the battery tray can be prolonged. Moreover, when the edge beam of the battery tray is impacted, a magnitude of impact transmitted to inside of the battery pack is reduced, which can reduce a risk of damaging a battery core of the battery pack, thereby improving usage safety of the battery pack.

The present disclosure further provides a battery tray.

The present disclosure further provides a battery pack.

The present disclosure further provides a vehicle.

According to the edge beam of a battery tray of the present disclosure, the battery tray has a placement groove configured to place a battery core. The edge beam includes an edge beam body. The edge beam body defines a cavity. The edge beam body has a partition portion. The partition portion is located in the cavity. The partition portion is connected between a top wall and a bottom wall of the cavity to partition the cavity into multiple sub-cavities. The multiple sub-cavities are arranged in sequence in a width direction of the edge beam. In a direction from an upper end to a lower end of the edge beam, the partition portion inclines away from the placement groove.

The edge beam for a battery tray of the present disclosure has improved structural strength, stiffness, and stability of the edge beam, and has a reduced deformation risk, so that service lives of the edge beam and the battery tray can be prolonged. Moreover, when the sub-cavity of the multiple sub-cavities placed away from the placement groove is impacted, the impacted sub-cavity can absorb the impact, so that a magnitude of impact transmitted to inside of the battery pack can be reduced, which can reduce a risk of damaging a battery core of the battery pack, thereby improving usage safety of the battery pack.

In some examples of the present disclosure, in the width direction of the edge beam, the cavity has a first side wall arranged away from the placement groove. The first side wall is connected between the top wall and the bottom wall of the cavity. The first side wall is connected to the partition portion.

In some examples of the present disclosure, the cavity has a second side wall close to the placement groove. The second side wall is connected between the top wall and the bottom wall of the cavity. The second side wall is connected to the partition portion. In the direction of the upper end to the lower end of the edge beam, the second side wall inclines toward the placement groove.

In some examples of the present disclosure, a cross-sectional shape of each sub-cavity is a triangle or a trapezoid.

In some examples of the present disclosure, the multiple sub-cavities include a first sub-cavity and a second sub-cavity. The first sub-cavity is located on a side of the second sub-cavity close to the placement groove. A cross-sectional shape of the first sub-cavity is a triangle or a trapezoid, and/or a cross-sectional shape of the second sub-cavity is a trapezoid.

In some examples of the present disclosure, the triangle is an equicrural triangle or an equilateral triangle.

In some examples of the present disclosure, an included angle between the bottom wall of the cavity and the partition portion is β. β satisfies a relation: 50° ≤ β ≤ 70°.

In some examples of the present disclosure, an included angle between the second side wall and the partition portion is α. α satisfies a relation: 50° ≤ α ≤ 70°.

In some examples of the present disclosure, a lower end of the first side wall is connected with a first connection portion extending toward inside of the cavity. The first connection portion is located on a side of the bottom wall of the cavity facing the top wall of the cavity. The first side wall is connected to the bottom wall of the cavity and the partition portion through the first connection portion. The first connection portion is fixedly connected to the bottom wall of the cavity.

An upper end of the second side wall is connected with a second connection portion extending toward the inside of the cavity. The second connection portion is located on a side of the top wall of the cavity facing the bottom wall of the cavity. The second side wall is connected to the top wall of the cavity and the partition portion through the second connection portion. The second connection portion is fixedly connected to the top wall of the cavity.

The top wall of the cavity, the bottom wall of the cavity, the first side wall, and the second side wall jointly define the cavity.

In some examples of the present disclosure, the edge beam includes a support portion. The support portion is arranged on a side of the edge beam body close to the placement groove. The support portion is configured to support the battery core.

In some examples of the present disclosure, the edge beam is formed in one piece.

The battery tray of the present disclosure includes the above edge beam for a battery tray.

The battery tray of the present disclosure includes a bottom tray plate and a side frame. The bottom tray plate includes a bottom plate body and an extension. The bottom plate body defines the placement groove configured to place a battery core. The extension extends along a circumferential edge of the bottom plate body. The side frame includes a first edge beam, a second edge beam, a third edge beam, and a fourth edge beam. At least one of the first edge beam and the second edge beam is the edge beam. The first edge beam and the second edge beam are oppositely arranged in a first direction. The third edge beam and the fourth edge beam are oppositely arranged in a second direction. The first edge beam, the second edge beam, the third edge beam, and the fourth edge beam are connected to form a mounting space. The bottom plate body is mounted in the mounting space. In a height direction of the battery tray, the extension is located above the side frame and arranged on the side frame. The first edge beam and/or the second edge beam has a support portion. The support portion is configured to support the bottom tray plate. One of the first direction and the second direction is a length direction of the battery tray, and the other thereof is a width direction of the battery tray.

The battery pack of the present disclosure includes a battery core and a battery tray. The battery tray is the above battery tray. The battery tray has the placement groove. The battery core is placed in the placement groove.

The vehicle of the present disclosure includes the above battery pack.

Part of additional aspects and advantages of the present disclosure is provided in the following description. The part will be apparent from the following description, or is learned through practice of the present disclosure.

### BRIEF DESCRIPTION OF THE DRAWINGS

FIG. 1 is an exploded view of a battery pack according to an embodiment of the present disclosure;
FIG. 2 is a sectional view of a battery pack according to an embodiment of the present disclosure;
FIG. 3 is an enlarged view of A in FIG. 2;
FIG. 4 is a schematic assembled diagram of a battery tray and a battery core according to an embodiment of the present disclosure;
FIG. 5 is a schematic diagram of a battery tray according to an embodiment of the present disclosure;
FIG. 6 is an exploded view of a battery tray according to an embodiment of the present disclosure;
FIG. 7 is a schematic diagram of a bottom tray plate of a battery tray according to an embodiment of the present disclosure;
FIG. 8 is a schematic diagram of a side frame of a battery tray according to an embodiment of the present disclosure;
FIG. 9 is a schematic diagram of a side edge beam of a battery tray according to an embodiment of the present disclosure;
FIG. 10 is an enlarged view of B in FIG. 9;
FIG. 11 is a partial enlarged assembled view of a battery tray and a battery core according to an embodiment of the present disclosure;
FIG. 12 is a sectional view of an edge beam according to an embodiment of the present disclosure; and
FIG. 13 is a schematic diagram of a vehicle according to an embodiment of the present disclosure.

### DETAILED DESCRIPTION

Embodiments of the present disclosure are described in detail below, and examples of the embodiments are shown in the drawings. Same or similar elements or elements having same or similar functions are represented by same or similar reference numerals throughout the description. The embodiments described below with reference to the drawings are exemplary and used only for explaining the present disclosure, and should not be construed as a limitation on the present disclosure.

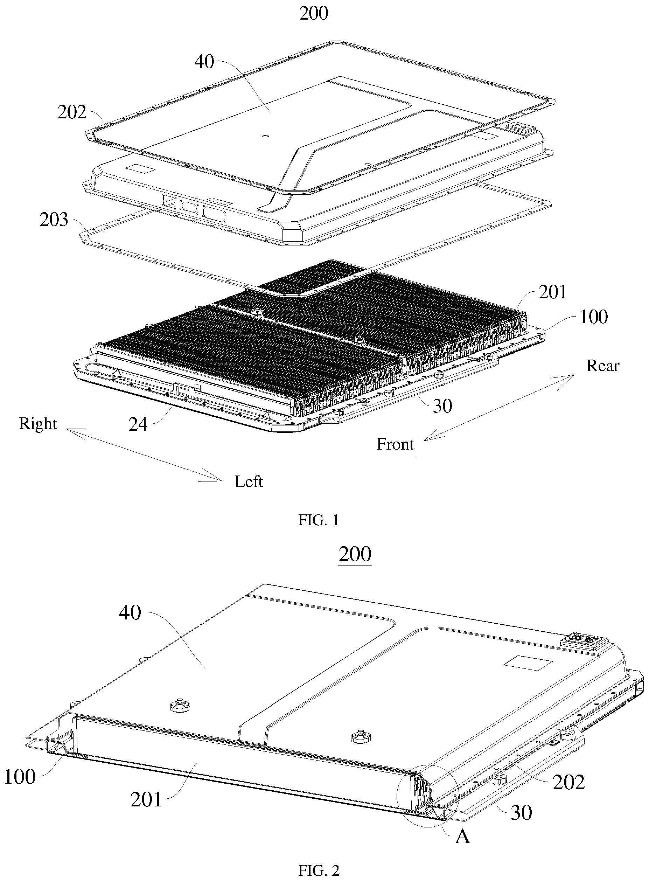

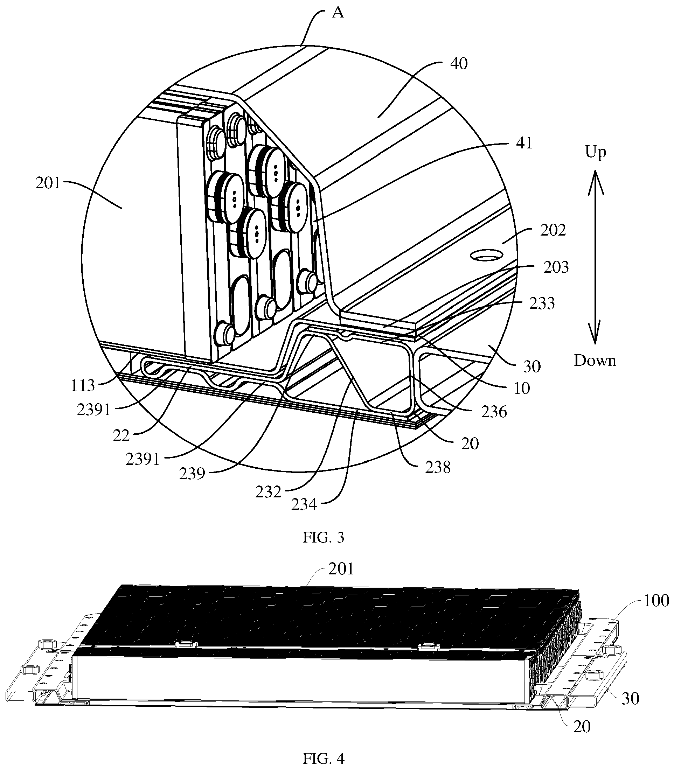

An edge beam 23 for a battery tray 100 in the embodiments of the present disclosure is described below with reference to FIG. 1 to FIG. 12. Multiple edge beams 23 are constructed as a side frame 20 of the battery tray 100. The battery tray 100 is applicable to a battery pack 200.

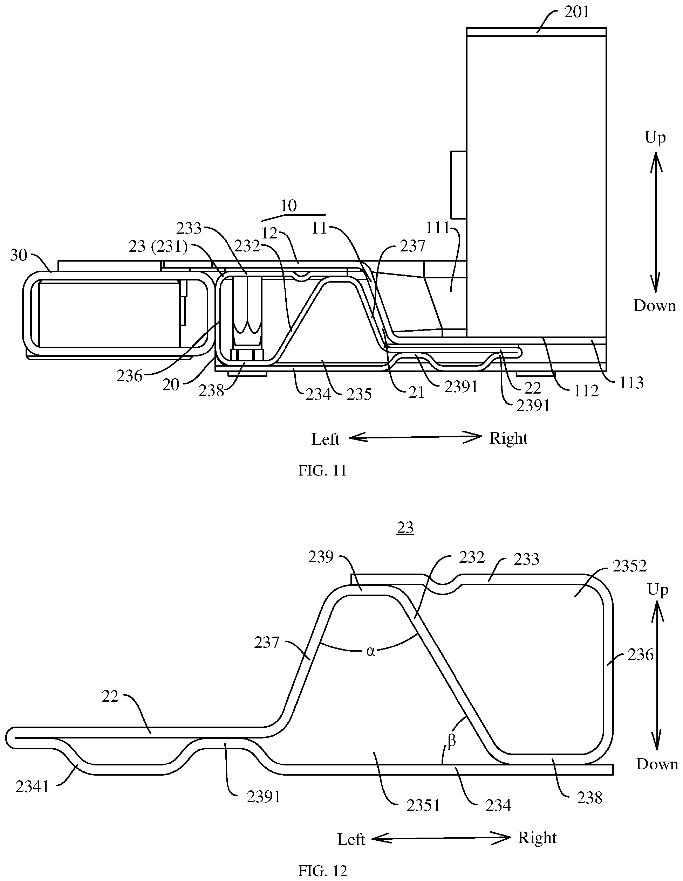

FIG. 1 to FIG. 12 show an edge beam 23 in the embodiments of the present disclosure. The edge beam 23 includes an edge beam body 231. The edge beam body 231 defines a cavity 2311. The edge beam body 231 has a partition portion 232. The partition portion 232 is located in the cavity 2311. The partition portion 232 is connected between a top wall 233 of the cavity 2311 and a bottom wall 234 of the cavity 2311. Further, the partition portion 232 is inclinedly connected between the top wall 233 of the cavity 2311 and the bottom wall 234 of the cavity 2311. The partition portion 232 may partition the cavity 2311 into multiple sub-cavities 235. The multiple sub-cavities 235 are arranged in sequence in a width direction of the edge beam 23. When the battery tray 100 is placed in a placement manner shown in FIG. 11, the width direction of the edge beam 23 is a left-right direction in FIG. 11. In some embodiments, the width direction of the edge beam 23 may be the same as a width direction of the battery tray 100 or a width direction of a vehicle 2000. In some other embodiments, the width direction of the edge beam 23 may be the same as a length direction of the battery tray 100 or a length direction of the vehicle 2000.

Since the partition portion 232 is inclinedly connected between the top wall 233 of the cavity 2311 and the bottom wall 234 of the cavity 2311, the partition portion 232 is supported between the top wall 233 of the cavity 2311 and the bottom wall 234 of the cavity 2311, which can improve structural strength and stiffness of the edge beam body 231, and improve structural stability of the edge beam body 231, so that a deformation risk of the edge beam 23 can be reduced, thereby prolonging service lives of the edge beam 23 and the battery tray 100. In addition, since the multiple sub-cavities 235 are arranged in sequence in the width direction of the edge beam 23, when a sub-cavity 235 of the multiple sub-cavities 235 away from a placement groove 111 is impacted, for example, when the a sub-cavity 235 located on a left side in FIG. 11 is impacted, the impacted sub-cavity 235 can absorb the impact, which reduces a magnitude of impact transmitted to inside of the battery pack 200, so that a risk of damaging a battery core 201 of the battery pack 200 can be reduced, thereby improving usage safety of the battery pack 200.

The edge beam body 231 of the present disclosure can improve the structural strength, stiffness, and stability of the edge beam 23, and reduce a deformation risk of the edge beam 23, thereby prolonging the service lives of the edge beam 23 and the battery tray 100. Moreover, when the sub-cavity 235 of the multiple sub-cavities 235 away from the placement groove 111 is impacted, the impacted sub-cavity 235 can absorb the impact, so that the magnitude of the impact transmitted to the inside of the battery pack 200 can be reduced, which can reduce the risk of damaging the battery core 201 or a battery module of the battery pack 200, thereby improving the usage safety of the battery pack 200.

In addition, as shown in FIG. 11 and FIG. 12, when the edge beam 23 is placed in a placement manner shown in FIG. 11, in a direction from an upper end to a lower end of the edge beam 23, the partition portion 232 is arranged to incline away from the placement groove 111, which may be understood as that the partition portion 232 is arranged to incline away from the placement groove 111 of the battery tray 100, or may be understood as that in a direction from top to bottom of the battery tray 100, the partition portion 232 is arranged to incline and extend away from the placement groove 111. The partition portion 232 partitions the cavity 2311 into two sub-cavities 235. The two sub-cavities 235 are arranged in sequence in the width direction of the edge beam 23. In this way, the structural strength of the edge beam 23 can be improved, and the stability of the edge beam 23 can be improved, thereby improving a capability of supporting the battery core 201 by the edge beam 23, and further reducing the deformation risk of the side frame 20.

In some embodiments of the present disclosure, as shown in FIG. 11 and FIG. 12, a cross-sectional shape of each sub-cavity 235 is a triangle or a trapezoid. In this way, the structural stability of the edge beam 23 can be improved, and the deformation risk of the edge beam 23 can be further reduced, thereby further prolonging the service lives of the edge beam 23 and the battery tray 100.

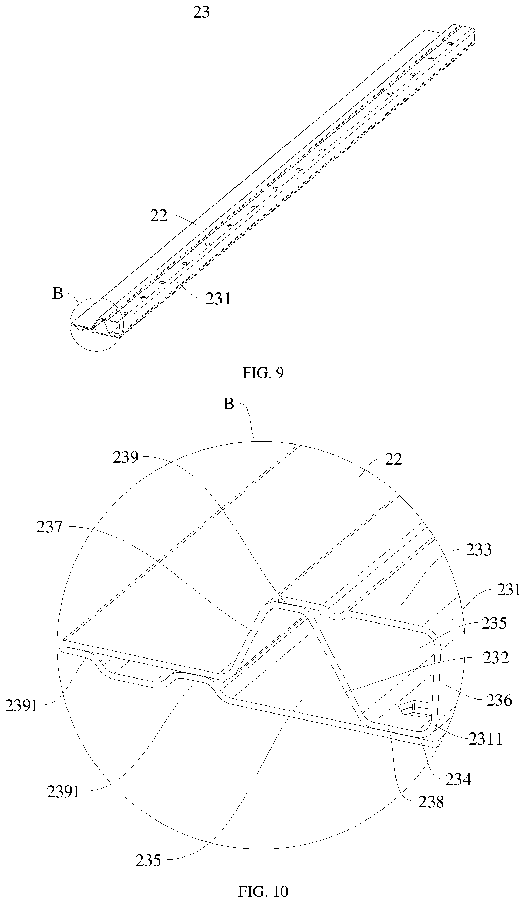

In some embodiments of the present disclosure, as shown in FIG. 10 and FIG. 11, in the width direction of the edge beam 23, the cavity 2311 has a first side wall 236 arranged away from the placement groove 111. The first side wall 236 is connected between the top wall 233 of the cavity 2311 and the bottom wall 234 of the cavity 2311, and the first side wall 236 is connected to the partition portion 232. In some optional embodiments, as shown in FIG. 11, a lower end of the first side wall 236 is connected with a first connection portion 238 extending toward inside of the cavity 2311. The first connection portion 238 is located on a side of the bottom wall 234 of the cavity 2311 facing the top wall 233 of the cavity 2311. The first side wall 236 is connected to the bottom wall 234 of the cavity 2311 and the partition portion 232 through the first connection portion 238. The first connection portion 238 is fixedly connected to the bottom wall 234 of the cavity 2311. For example, the first connection portion 238 is welded to the bottom wall 234 of the cavity 2311. In this way, the structural strength of the edge beam 23 can be further improved, and the stability of the edge beam 23 can be further improved.

In some optional embodiments, as shown in FIG. 10 and FIG. 11, in the width direction of the edge beam 23, the cavity 2311 has a second side wall 237 close to the placement groove 111. The second side wall 237 is connected between the top wall 233 of the cavity 2311 and the bottom wall 234 of the cavity 2311, and the second side wall 237 is connected to the partition portion 232. In the direction from the upper end to the lower end of the edge beam 23, the second side wall 237 inclines toward the placement groove 111. In some optional embodiments, as shown in FIG. 11, an upper end of the second side wall 237 is connected with a second connection portion 239 extending toward the inside of the cavity 2311. The second connection portion 239 is located on a side of the top wall 233 of the cavity 2311 facing the bottom wall 234 of the cavity 2311. The second side wall 237 is connected to the top wall 233 of the cavity 2311 and the partition portion 232 through the second connection portion 239. The second connection portion 239 is fixedly connected to the top wall 233 of the cavity 2311. For example, the second connection portion 239 is welded to the top wall 233 of the cavity 2311. The top wall 233 of the cavity 2311, the bottom wall 234 of the cavity 2311, the first side wall 236, and the second side wall 237 jointly define the cavity 2311. In this way, the structural strength of the edge beam 23 can be further improved, and the stability of the edge beam 23 can be further improved.

In some optional embodiments, as shown in FIG. 12, an included angle between the bottom wall 234 of the cavity 2311 and the partition portion 232 is β. β satisfies a relation: 50° ≤ (3 ≤ 70°. Further, an included angle between the second side wall 237 and the partition portion 232 is α. α satisfies a relation: 50° ≤ α ≤ 70°. In this way, the structural stability of the edge beam 23 can be improved, and the deformation risk of the edge beam 23 can be reduced, thereby prolonging the service lives of the edge beam 23 and the battery tray 100.

The multiple sub-cavities 235 include a first sub-cavity 2351 and a second sub-cavity 2352. In the width direction of the edge beam 23, the first sub-cavity 2351 is located on a side of the second sub-cavity 2352 close to the placement groove 111. A cross-sectional shape of the first sub-cavity 2351 is a triangle or a trapezoid, and/or a cross-sectional shape of the second sub-cavity 2352 is a trapezoid.

Further, according to a specific embodiment of the present disclosure, the multiple sub-cavities 235 include the first sub-cavity 2351 and the second sub-cavity 2352. In the width direction of the edge beam 23, the first sub-cavity 2351 is located on the side of the second sub-cavity 2352 close to the placement groove 111. The cross-sectional shape of the first sub-cavity 2351 is a triangle. Further, the triangle is an equicrural triangle or an equilateral triangle. The bottom wall 234 of the cavity 2311 forms a bottom wall of the triangle. In this way, the structural stability of the edge beam 23 can be further improved, and the deformation risk of the edge beam 23 can be further reduced, thereby further prolonging the service lives of the edge beam 23 and the battery tray 100.

Further, the included angle between the bottom wall 234 of the cavity 2311 and the partition portion 232 is constructed as a base angle of the triangle. The base angle is β. β satisfies the relation: 50° ≤ β ≤ 70°. For example, β is a value such as 50°, 60°, or 70°. In this way, the structural stability of the edge beam 23 can be further improved, and the deformation risk of the edge beam 23 can be further reduced, thereby further prolonging the service lives of the edge beam 23 and the battery tray 100.

Further, a vertex angle of the triangle is α. α satisfies the relation: 50° ≤ α ≤ 70°. For example, α is a value such as 50°, 60°, or 70°. In this way, the cross-sectional shape of the first sub-cavity 2351 can be arranged as an equilateral triangle. Therefore, the structural stability of the edge beam 23 can be further improved, and the deformation risk of the edge beam 23 can be further reduced, thereby further prolonging the service lives of the edge beam 23 and the battery tray 100.

According to another specific embodiment of the present disclosure, as shown in FIG. 11 and FIG. 12, the multiple sub-cavities 235 include the first sub-cavity 2351 and the second sub-cavity 2352. In the width direction of the edge beam 23, the first sub-cavity 2351 is located on the side of the second sub-cavity 2352 close to the placement groove 111. The cross-sectional shape of the first sub-cavity 2351 is arranged as a trapezoid. Further, the bottom wall 234 of the cavity 2311 forms a bottom wall of the trapezoid. The included angle between the bottom wall 234 of the cavity 2311 and the partition portion 232 is constructed as a base angle of the trapezoid of the first sub-cavity 2351. The base angle is β. β satisfies the relation: 50° ≤ β ≤ 70°. For example, β is a value such as 50°, 60°, or 70°. In this way, the structural stability of the edge beam 23 can be further improved, and the deformation risk of the edge beam 23 can be further reduced, thereby further prolonging the service lives of the edge beam 23 and the battery tray 100.

Further, as shown in FIG. 12, an included angle between two waists of the trapezoid of the first sub-cavity 2351 is α. α satisfies the relation: 50° ≤ α ≤ 70°. For example, α is a value such as 50°, 60°, or 70°. In this way, the structural stability of the edge beam 23 can be further improved, and the deformation risk of the edge beam 23 can be further reduced, thereby further prolonging the service lives of the edge beam 23 and the battery tray 100.

In some embodiments of the present disclosure, as shown in FIG. 12, the cross-sectional shape of the second sub-cavity 2352 is a trapezoid. The bottom wall 234 of the cavity 2311 forms a top wall of the trapezoid of the second sub-cavity 2352. The top wall 233 of the cavity 2311 forms a bottom wall of the trapezoid of the second sub-cavity 2352. In this way, the structural stability of the edge beam 23 can be further improved, and the deformation risk of the edge beam 23 can be further reduced, thereby further prolonging the service lives of the edge beam 23 and the battery tray 100.

It should be noted that, a cross section of the first sub-cavity 2351 refers to a section in the width direction of the edge beam 23, that is, a section of the first sub-cavity 2351 perpendicular to a length direction of the edge beam 23. A cross section of the second sub-cavity 2352 refers to a section in the width direction of the edge beam 23, that is, a section of second sub-cavity 2352 perpendicular to the length direction of the edge beam 23.

In some embodiments of the present disclosure, the edge beam 23 includes a support portion 22. The support portion 22 is arranged on a side of the edge beam body 231 close to the placement groove 111. The support portion 22 is configured to support the battery core 201. To be specific, the edge beam body 231 is connected with the support portion 22 extending toward the placement groove 111. The support portion 22 is configured to support the battery core 201 in a bottom tray plate 10 of the battery tray 100. The support portion 22 supports a lower surface of the bottom tray plate 10 to support the battery core 201. The edge beam 23 bears a majority of a weight of the battery core 201. The bottom tray plate 10 of the battery tray 100 does not bear the weight of the battery core 201 or bears only a minority of the weight of the battery core 201, which significantly reduces a load-bearing requirement of the bottom tray plate 10.

In some embodiments of the present disclosure, the edge beam 23 is formed in one piece, which may be understood as that the edge beam body 231 and the support portion 22 are formed in one piece. Further, the edge beam 23 may be made of an aluminum material, or the edge beam 23 may be made of a steel material, but the present disclosure is not limited thereto. The edge beam 23 may alternatively be made of another metal material that has a same effect as the steel material. For example, the edge beam 23 is made of the steel material. The edge beam 23 may be formed from the steel material through rolling, or the edge beam 23 may be formed from the steel material through extrusion. Since the edge beam 23 is arranged in one piece, a load-bearing capacity of the edge beam 23 can be improved, and the deformation risk of the edge beam 23 can be reduced.

The battery tray 100 in the embodiments of the present disclosure includes multiple edge beams 23. The multiple edge beams 23 are connected to form the side frame 20.

As shown in FIG. 1 to FIG. 12, the battery tray 100 in embodiments of the present disclosure includes the bottom tray plate 10 and the side frame 20. The bottom tray plate 10 includes a bottom plate body 11 and an extension 12. The bottom plate body 11 defines the placement groove 111 configured to place the battery core 201 or the battery module. In the present disclosure, a description is provided through an example in which the placement groove 111 is configured to place the battery core 201. Further, a bottom wall 113 of the placement groove has a compressed region 112 configured to support the battery core 201. The compressed region 112 refers to a region of an orthographic projection of the bottom wall 113 of the placement groove overlapping an orthographic projection of the battery core 201 in a height direction of the battery tray 100 when the battery core 201 is mounted in the placement groove 111, or may be understood as a contact region between the battery core 201 and the bottom wall 113 of the placement groove when the battery core 201 is mounted in the placement groove 111. The contact region includes a direct or indirect region between the battery core 201 and the bottom wall 113 of the placement groove. For example, when an adhesive or a cooling structure exists between the battery core 201 and the bottom wall 113 of the placement groove, the battery core 201 indirectly contacts the bottom wall 113 of the placement groove. When no other objects exist between the battery core 201 and the bottom wall 113 of the placement groove, the battery core 201 directly contacts the bottom wall 113 of the placement groove. Alternatively, the compressed region 112 may be understood as a region of the bottom wall 113 of the placement groove on which the weight of the battery core 201 is directly applied. The orthographic projection of the bottom wall 113 of the placement groove in the height direction of battery tray 100 is a projection of the bottom wall 113 of the placement groove in a plane perpendicular to the height direction of battery tray 100. The orthographic projection of the battery core 201 in the height direction of battery tray 100 is a projection of the battery core 201 in the plane perpendicular to the height direction of battery tray 100. It may be understood that, when the battery tray 100 is mounted to a vehicle 2000, a height direction of the battery tray 100 may be the same as a height direction of the vehicle 2000.

When the battery core 201 is mounted in the battery tray 100, the battery core 201 is located in the compressed region 112 of the placement groove 111, and the extension 12 is arranged to extend along a circumferential edge of the bottom plate body 11. Further, the extension 12 is constructed as an annular structure. Specifically, the extension 12 is constructed as a closed annular structure.

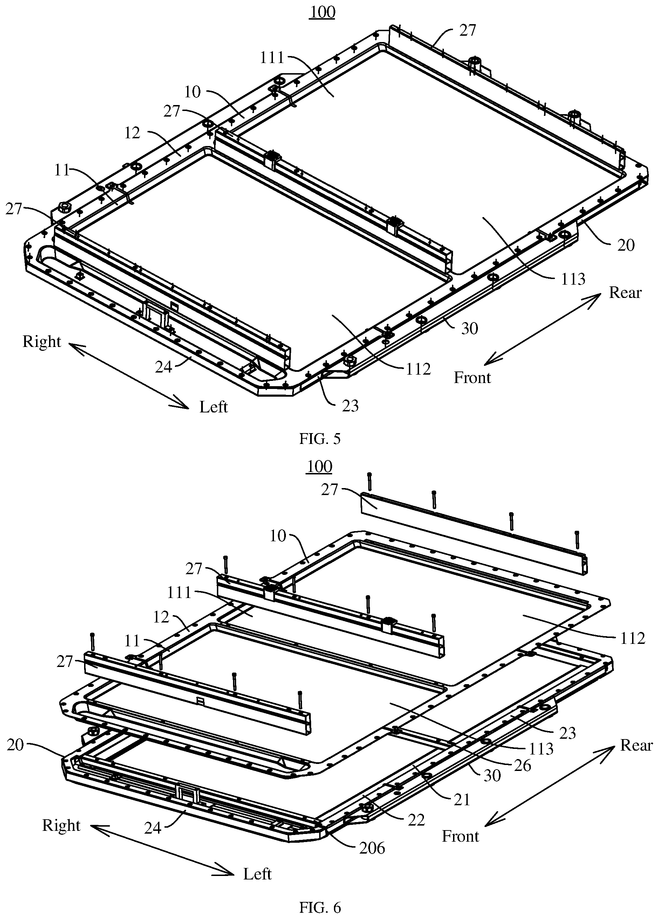

The bottom plate body 11 is mounted to the side frame 20. Further, the bottom plate body 11 is fixedly mounted to the side frame 20. The bottom plate body 11 may be bonded to the side frame 20. Alternatively, the bottom plate body 11 may be mounted to the side frame 20 through a bolt. A specific manner of assembling the bottom plate body 11 and the side frame 20 is not specific limited, and is selected based on an actual need. Further, the side frame 20 defines a mounting space 21. The bottom plate body 11 is mounted in the mounting space 21. The extension 12 is located outside of the mounting space 21. In the height direction of the battery tray 100, the extension 12 is located above the side frame 20 and is arranged on the side frame 20. The side frame 20 has a support portion 22 extending toward inside of the mounting space 21. The support portion 22 is configured to support the bottom tray plate 10. Further, the support portion 22 is configured to support the bottom plate body 11, and the support portion 22 is configured to support the compressed region 112 of the bottom tray plate 10. As shown in FIG. 6, FIG. 8, and FIG. 11, in the present disclosure, a description is provided through an example in which the battery tray 100 is placed in an up-down direction. After the bottom plate body 11 is mounted in the mounting space 21, the extension 12 is arranged outside of the mounting space 21. In the up-down direction of the battery tray 100, the extension 12 is arranged corresponding to the side frame 20. Specifically, as shown in FIG. 11, the extension 12 is located above the side frame 20. The extension 12 is arranged directly facing the side frame 20. In the up-down direction of the battery tray 100, the extension 12 can cover an entire upper surface of the side frame 20.

As shown in FIG. 11, when the battery core 201 is mounted in the placement groove 111, the battery core 201 is located in the compressed region 112. The support portion 22 supports the compressed region 112. The battery core 201 is mounted to the side frame 20. The side frame 20 bears a majority of the weight of the battery core 201. The bottom tray plate 10 does not bear the weight of the battery core 201 or bears only a minority of the weight of the battery core 201, which significantly reduces the load-bearing requirement of the bottom tray plate 10. Further, the bottom tray plate 10 is arranged as an insulation member. Further, the bottom tray plate 10 is arranged as a non-metal member. The bottom tray plate 10 may be made of a material with smaller strength and a smaller thickness. The bottom tray plate 10 may be made of a lightweight non-metallic insulating composite material. For example, the lightweight non-metallic insulating composite material may be made of resin and glass fiber. The resin may be epoxy resin or polyurethane, but the present disclosure is not limited thereto. The lightweight non-metallic insulating composite material may also be made of another non-metallic composite material that has a same effect as the resin and the glass fiber. In this case, a weight of the bottom tray plate 10 can be reduced, which facilitates a lightweight design of the battery tray 100 and the battery pack 200. Moreover, compared with an existing bottom tray plate 10 made of an aluminum material, the bottom tray plate 10 made of the composite material in the present disclosure can reduce production costs of the bottom tray plate 10, which facilitates reduction of production costs of the battery tray 100 and the battery pack 200. It should be noted that, the bottom tray plate 10 made of the non-metallic composite material has excellent electrical insulation performance. Therefore, even if the vehicle 2000 encounters a serious bottoming out accident, the battery pack 200 does not have a high voltage risk such as arcing.

In some optional embodiments, the bottom tray plate 10 is formed in one piece. The bottom tray plate 10 is formed from the lightweight non-metallic insulating composite material through compression molding. During the compression molding, the resin melts, flows, and cures, so that desirable air tightness is formed in the bottom tray plate 10. In addition, the formation through a mold can ensure that the bottom tray plate 10 has a desirable flatness and a desirable dimension precision, which ensures a sealing function of the bottom tray plate 10. The side frame 20 may be formed from metal through welding, provided that strength of the welded structure and a necessary product flatness are ensured. The welding is efficient, which improves a productive efficiency of the battery tray 100. Moreover, since the bottom tray plate 10 is responsible for sealing, welding line polishing and an air tightness test are not required, which avoids a risk of a sealing failure caused by welding. The bottom tray plate 10 may be formed from a composite material through compression molding, the bottom tray plate 10 has a high productive efficiency, and the mold has a high precision and therefore a high degree of flatness may be achieved, which reduces requirements on a size of the battery core 201.

In addition, in an existing battery tray 100, a load-bearing function and a sealing function are not separately designed in terms of product structure. Therefore, during manufacturing of the battery tray 100, overall load bearing and sealing both need to satisfy requirements, which results in a low manufacturing efficiency and a low yield of the battery tray 100. However, in the present disclosure, the load-bearing function and the sealing function are separately designed. The side frame 20 is mainly responsible for load bearing, and the bottom tray plate 10 is mainly responsible for sealing of the battery tray 100, which improves the manufacturing efficiency and the yield of the battery tray 100.

The bottom tray plate 10 and the side frame 20 cooperate with each other, to be specific, the side frame 20 bears the majority of the weight of the battery core 201, while the bottom tray plate 10 bears only the minority of the weight of the battery core 201, and the bottom tray plate 10 is responsible for the sealing, so that a thickness of the bottom tray plate 10 can be reduced, and the bottom tray plate 10 may be made of the lightweight composite material, which facilitates a lightweight design and cost reduction of the battery tray 100 and the battery pack 200. Moreover, after the bottom tray plate 10 and the side frame 20 are assembled together, the risk of a sealing failure of the battery tray 100 caused by welding does not exist, and the welding line polishing and the air tightness test of the battery tray 100 are not required, which improves the productive efficiency of the battery tray 100.

In some embodiments of the present disclosure, as shown in FIG. 11, when the battery tray 100 is placed in the placement manner shown in FIG. 11, in the height direction of the battery tray 100, an orthographic projection of the support portion 22 has an overlapping region with an orthographic projection of the compressed region 112. In this way, after the battery core 201 is placed into the placement groove 111, it can be ensured that the support portion 22 supports the battery core 201 and that the side frame 20 bears the majority of the weight of the battery core 201. It may be understood that, when the battery tray 100 is mounted to the vehicle 2000, the height direction of the battery tray 100 may be the same as the height direction of the vehicle 2000.

In some embodiments of the present disclosure, the compressed region 112 is formed on the bottom wall 113 of the placement groove, which may be understood as that the compressed region 112 is arranged on the bottom wall 113 of the placement groove. As shown in FIG. 11, when the battery tray 100 is placed in the placement manner shown in FIG. 11, the support portion 22 is located below the bottom plate body 11, and the support portion 22 supports the bottom wall 113 of the placement groove. In this way, it can be ensured that the support portion 22 supports the compressed region 112 from a position below the compressed region, which can further ensure that the support portion 22 supports the battery core 201, and further ensure that the side frame 20 bears the majority of the weight of the battery core 201. Therefore, a proper arrangement position is realized for the compressed region 112.

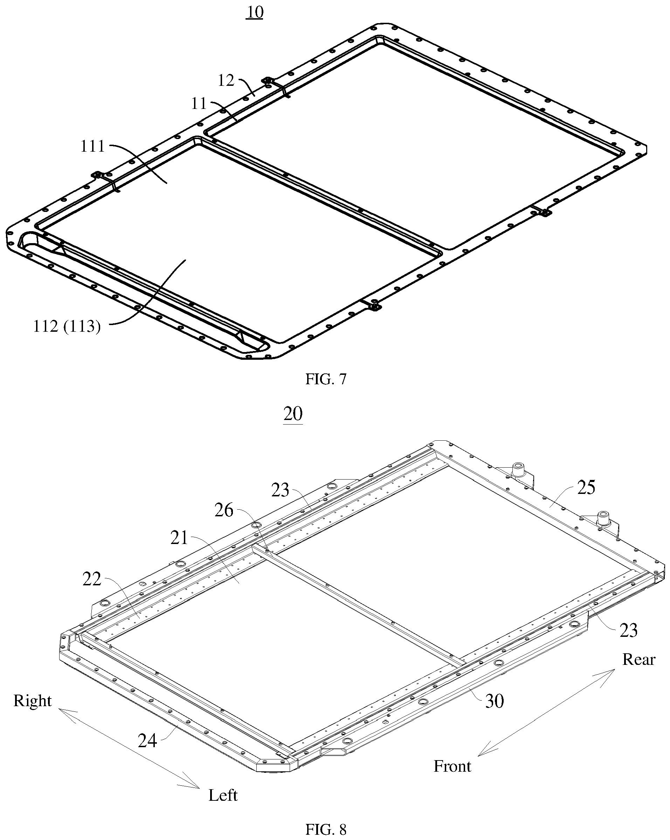

In some embodiments of the present disclosure, as shown in FIG. 6 and FIG. 8, the side frame 20 may further include a first edge beam, a second edge beam, a third edge beam, and a fourth edge beam. The first edge beam and the second edge beam are oppositely arranged in a first direction. At least one of the first edge beam and the second edge beam is the edge beam 23 in the above embodiments. The third edge beam and the fourth edge beam are oppositely arranged in a second direction. It should be noted that, the first edge beam and the second edge beam may be constructed as side edge beams 23 of the side frame 20. The third edge beam may be constructed as one of a front end beam 24 or a rear end beam 25 of the side frame 20. The fourth edge beam may be constructed as the other of the front end beam 24 and the rear end beam 25. When the side frame 20 is placed in a placement manner shown in FIG. 8, the first edge beam and the second edge beam are arranged away in a left-right direction in FIG. 8. The front end beam 24 and the rear end beam 25 are both connected between the two side edge beams 23. The first edge beam, the second edge beam, the third edge beam, and the fourth edge beam are connected to form the mounting space 21. The first edge beam, the second edge beam, the third edge beam, and the fourth edge beam are directly connected or indirectly connected. For example, the first edge beam and the third edge beam are connected. The first edge beam and the third edge beam may be directly connected, or the first edge beam and the third edge beam may be indirectly connected through another beam. The bottom plate body 11 is mounted in the mounting space 21. In the height direction of the battery tray 100, the extension 12 is located above the side frame 20 and arranged on the side frame 20. One of the first direction and the second direction may be the length direction of the battery tray 100, and the other of the first direction and the second direction may be the width direction of the battery tray 100. It may be understood that, when the battery tray 100 is mounted to the vehicle 2000, the width direction of the battery tray 100 may be the same as a width direction of the vehicle 2000, and the length direction of the battery tray 100 may be the same as the length direction of the vehicle 2000. Certainly, the width direction of the battery tray 100 may be the same as the length direction of the vehicle 2000, and the length direction of the battery tray 100 may be the same as the width direction of the vehicle 2000.

As shown in FIG. 6, when the battery tray 100 is placed in a direction shown in FIG. 6, the first direction may refer to a left-right direction in FIG. 6, and the second direction may refer to a front-rear direction in FIG. 6. Certainly, the first direction may alternatively refer to the front-rear direction in FIG. 6, and the second direction may alternatively refer to the left-right direction in FIG. 6. In the present disclosure, a description is provided through an example in which the left-right direction in FIG. 6 is the first direction and the front-rear direction in FIG. 6 is the second direction. The first edge beam and/or the second edge beam is provided with the support portion 22. The support portion 22 is configured to support the bottom tray plate 10. For example, the first edge beam and the second edge beam each are provided with the support portion 22. When the battery core 201 is arranged to extend in the left-right direction in FIG. 8, providing the support portion 22 on the first edge beam and/or the second edge beam can ensure that each battery core 201 is supported by the support portion 22, which can further ensure that the support portion 22 supports the battery core 201, and further ensure that the side frame 20 bears the majority of the weight of the battery core 201. In this way, a proper arrangement position can be realized for the support portion 22.

In some embodiments of the present disclosure, as shown in FIG. 8, the side frame 20 further include a support beam 26. The support beam 26 is connected between the two edge beams 23 (that is, the support beam 26 is connected between the first edge beam and the second edge beam), or the support beam 26 is connected between the front end beam 24 and the rear end beam 25, or the support beam 26 is connected between the front end beam 24 and the edge beam 23, or the support beam 26 is connected between the rear end beam 25 and the edge beam 23. In this way, structural strength of the side frame 20 can be improved, thereby improving structural strength of the battery tray 100.

In some embodiments of the present disclosure, as shown in FIG. 5 and FIG. 6, the battery tray 100 further includes an expansion beam 27. The expansion beam 27 is arranged on a side of the bottom tray plate 10 away from the side frame 20. When the battery tray 100 is placed in manners shown in FIG. 5 and FIG. 6, the expansion beam 27 is arranged above the bottom tray plate 10. The expansion beam 27 is mounted to the support beam 26 through a bolt. After the battery core 201 is mounted in the placement groove 111, when the battery core 201 expands, the expansion beam 27 can limit the battery core 201, which improves usage safety of the battery core 201.

In some optional embodiments, multiple support beams 26 are provided. The multiple support beams 26 are arranged at intervals in the length direction of the edge beam 23. The length direction of the edge beam 23 refers to the front-rear direction in FIG. 6. Multiple expansion beams 27 are provided. The multiple expansion beams 27 are arranged at intervals in the length direction of the edge beam 23. The multiple expansion beams 27 are in one-to-one correspondence with the multiple support beams 26. One expansion beam 27 is mounted to one support beam 26 through a bolt, so that the expansion beam 27 can be stably mounted to the side frame 20.

In some embodiments of the present disclosure, as shown in FIG. 11, the support portion 22 is arranged close to the lower end of the edge beam 23, which may be understood as that the support portion 22 is arranged close to an end portion of the edge beam 23 away from the bottom tray plate 10. Further, the support portion 22 of the first edge beam is arranged closed to a lower end of the first edge beam, and/or the support portion 22 of the second edge beam is arranged close to a lower end of the second edge beam. For example, the support portion 22 of the first edge beam is arranged close to the lower end of the first edge beam, and the support portion 22 of the second edge beam is arranged close to the lower end of the second edge beam. After the bottom plate body 11 is mounted in the mounting space 21, arranging the support portion 22 close to the end portion of the edge beam 23 away from the bottom tray plate 10 can ensure that the support portion 22 supports the bottom plate body 11 from a position below the bottom plate body, and can further ensure that the bottom plate body 11 can be mounted in the mounting space 21.

In some embodiments of the present disclosure, as shown in FIG. 5 to FIG. 7 and FIG. 11, when the battery tray 100 is placed in the placement manner shown in FIG. 11, an upper end of the placement groove 111 is arranged to be opened, so that the battery core 201 can be placed into the placement groove 111 through the open end of the placement groove 111. Moreover, the extension 12 is arranged to extend along the open end of the placement groove 111. As shown in FIG. 11, the extension 12 is connected to an upper end of the bottom plate body 11. After the bottom plate body 11 is mounted in the mounting space 21, the extension 12 can be arranged on outside of the placement groove 111, which can ensure that the extension 12 is arranged corresponding to the side frame 20 in the up-down direction of the battery tray 100, thereby ensuring sealing of the battery tray 100.

In some embodiments of the present disclosure, as shown in FIG. 8, FIG. 10, and FIG. 11, a surface of the support portion 22 close to the bottom tray plate 10 is constructed as a plane. In other words, as shown in FIG. 11, an upper surface of the support portion 22 is arranged as a plane. In this way, a support area between the support portion 22 and the bottom plate body 11 can be ensured, so that the support portion 22 can support the battery core 201 more effectively.

In some embodiments of the present disclosure, the support portion 22 is located below the bottom plate body 11 and is fixedly connected to the bottom plate body 11. Further, the bottom tray plate 10 is bonded to the side frame 20. Further, an adhesive (for example, a structural adhesive) is applied between the bottom tray plate 10 and the side frame 20, to bond the bottom tray plate 10 and the side frame 20. Thickness control is performed for the adhesive to compensate for a size tolerance of the side frame 20. In addition, the bottom tray plate 10 has a relatively desirable flatness, and manufacturing requirements for the bottom tray plate 10 and the side frame 20 can be reduced through the characteristic that the adhesive can eliminate the tolerance. Moreover, in an existing solution for welding the bottom tray plate 10 and the side frame 20, the bottom tray plate 10 is prone to deformation during the welding, which increases requirements on a size of the battery core 201 in a subsequent assembly process of the battery pack 200, and affects an assembly efficiency of the battery pack 200. However, in the present disclosure, the bottom tray plate 10 is bonded to the side frame 20, which replaces the welding between the bottom tray plate 10 and the side frame 20, so that the bottom tray plate 10 can be prevented from deformation, the requirements on the size of the battery core 201 can be reduced in the subsequent assembly process of the battery pack 200, and the assembly efficiency of the battery pack 200 can be improved.

In some embodiments of the present disclosure, the bottom tray plate 10 is formed in one piece. The bottom tray plate 10 is formed from the lightweight composite material through compression molding. During the compression molding, the resin melts, flows, and cures, so that desirable air tightness is formed in the bottom tray plate 10. In addition, the formation through a mold can ensure that the bottom tray plate 10 has a desirable flatness and a desirable dimension precision, which ensures a sealing function of the bottom tray plate 10.

In some embodiments of the present disclosure, the side frame 20 may be constructed as a metal member. The side frame 20 may be made of an aluminum material, or the side frame 20 may be made of a steel material, but the present disclosure is not limited thereto. The side frame 20 may alternatively be made of another metal material that has a same effect as the steel material. For example, the side frame 20 is made of the steel material. The side frame 20 may be formed from the steel material through rolling, or the side frame 20 may be formed from the steel material through extrusion. Arranging the side frame 20 as the metal member can improve a load-bearing capacity of the side frame 20, and reduce a deformation risk of the side frame 20.

In some optional embodiments, as shown in FIG. 10 and FIG. 11, a lower end of the second side wall 237 is connected with a support portion 22 extending toward the placement groove 111, and the support portion 22 is connected to the bottom wall 234 of the cavity 2311. Further, as shown in FIG. 12, in the width direction of the edge beam 23, the bottom wall 234 of the cavity 2311 has a structure reinforcement portion 2341 extending to a position below the support portion 22, and the structure reinforcement portion 2341 is connected to an end portion of the support portion 22 close to the bottom tray plate 10, which may alternatively be understood that an end of the structure reinforcement portion 2341 close to the mounting space 21 (or the placement groove 111) extends to the position below the support portion 22, and an end portion of the structure reinforcement portion 2341 close to the mounting space 21 (or the placement groove 111) is connected to the end portion of the support portion 22 close to the mounting space 21 (or the placement groove 111). Further, a boss structure 2391 protruding toward the support portion 22 is arranged on the structure reinforcement portion 2341, and the boss structure 2391 is connected to the support portion 22. In this way, the structural strength of the edge beam 23 can be further improved, and the stability of the edge beam 23 can be further improved.

In some optional embodiments, the structure reinforcement portion 2341 is provided with multiple boss structures 2391, the multiple boss structures 2391 are arranged in sequence in the width direction of the edge beam 23, and at least one of the multiple boss structures 2391 is located below the compressed region 112. In this way, the boss structure 2391 can support the battery core 201, which can further improve the load-bearing capacity of the side frame 20, and reduce a deformation risk of the support portion 22.

In some embodiments of the present disclosure, as shown in FIG. 5 and FIG. 6, the side frame 20 is connected with a lug structure 30. The lug structure 30 is provided with a mounting hole. The lug structure 30 is mounted to the vehicle 2000 through a fastener (for example, a bolt), to mount the battery pack 200 to the vehicle 2000.

As shown in FIG. 1 to FIG. 11, the battery pack 200 in the embodiments of the present disclosure includes a battery core 201, a battery tray 100, and a cover body 40. The battery tray 100 is the battery tray 100 in the above embodiments. The cover body 40 and the bottom tray plate 10 jointly define a placement cavity 41 configured to place the battery core 201, and the cover body 40 is connected to the side frame 20. In some optional embodiments, the cover body 40 is arranged to cover the open end of the placement groove 111 to define the placement cavity 41. The extension 12 is sandwiched between the cover body 40 and the side frame 20. A bolt is caused to extend through the cover body 40, the extension 12, and the side frame 20 to assemble the cover body 40, the bottom tray plate 10, and the side frame 20 together. In some optional embodiments, a seal member 203 (for example, a seal ring) is sandwiched between the extension 12 and the cover body 40. The seal member 203 can seal the placement cavity 41. The cover body 40 and the bottom tray plate 10 define a hermetic insulating cavity (that is, the placement cavity 41). After the battery core 201 is placed into the placement cavity 41, the battery core 201 can be completely isolated from the side frame 20. The battery core 201 is in a completely insulating environment, so that the battery pack 200 has no risk of leakage. In some embodiments of the present disclosure, as shown in FIG. 1, the battery pack 200 may further include a pressing plate 202. The pressing plate 202 is constructed as a closed annular structure. The cover body 40, the seal member 203, and the extension 12 are sandwiched between the pressing plate 202 and the side frame 20. A bolt is caused to extend through the pressing plate 202, the cover body 40, the extension 12, and the side frame 20 to assemble the pressing plate 202, the cover body 40, the bottom tray plate 10, and the side frame 20 together. The pressing plate 202 can uniformly compress the entire seal member 203, to ensure reliable sealing of the placement cavity 41. In some other embodiments, the battery pack includes a battery core, a cover body, and a battery tray. The battery tray includes a bottom tray plate and multiple edge beams. At least one of the edge beams is the edge beam in the above embodiments. The multiple edge beams are connected to form a side frame. The side frame and the bottom tray plate jointly define a placement groove configured to place the battery core. The cover body is connected to the side frame to form a placement cavity configured to place the battery core. The bottom tray plate is a flat plate structure.

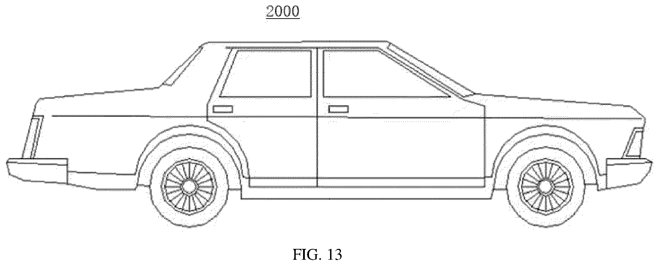

As shown in FIG. 13, the vehicle 2000 in the embodiments of the present disclosure includes the battery pack 200 in the above embodiments. The battery pack 200 is mounted to the vehicle 2000 to provide electric energy to the vehicle 2000. The side frame 20 of the battery pack 200 bears a majority of a weight of the battery core 201, while the bottom tray plate 10 bears only a minority of the weight of the battery core 201, and the bottom tray plate 10 is mainly responsible for sealing, so that the bottom tray plate 10 may be made of a lightweight composite material, which facilitates a lightweight design and cost reduction of the battery tray 100, the battery pack 200, and the vehicle 2000. Moreover, after the bottom tray plate 10 and the side frame 20 are assembled together, the risk of a sealing failure of the battery tray 100 caused by welding does not exist, and the welding line polishing and the air tightness test of the battery tray 100 are not required, which improves the productive efficiency of the battery tray 100 and the vehicle 2000. In addition, the bottom tray plate 10 made of the composite material has excellent electrical insulation performance. Therefore, even if the vehicle 2000 encounters a serious bottoming out accident, the battery pack 200 does not have a high voltage risk such as arcing, so that safety of the vehicle 2000 is improved.

In the descriptions of this specification, descriptions using reference terms such as "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, exemplary descriptions of the above terms do not necessarily refer to the same embodiment or example. In addition, the described specific features, structures, materials, or characteristics may be combined in a proper manner in any one or more of the embodiments or examples.

Although the embodiments of the present disclosure are shown and described, a person of ordinary skill in the art should understand that various changes, modifications, replacements, and variations may be made to the embodiments without departing from the principle and spirit of the present disclosure, and the scope of the present disclosure is defined by the appended claims and their equivalents.

## Claims

1. An edge beam (23) for a battery tray (100), the battery tray (100) having a placement groove (111) configured to place a battery core (201), the edge beam comprising:
an edge beam body (231), the edge beam body (231) defining a cavity (2311), the edge beam body (231) having a partition portion (232), the partition portion (232) being located in the cavity (2311), the partition portion (232) being connected between a top wall (233) and a bottom wall (234) of the cavity (2311) to partition the cavity (2311) into a plurality of sub-cavities (235), the plurality of sub-cavities (235) being arranged in sequence in a width direction of the edge beam (23), and in a direction from an upper end to a lower end of the edge beam (23), the partition portion (232) being inclined away from the placement groove (111).

2. The edge beam (23) for a battery tray (100) according to claim 1, wherein in the width direction of the edge beam (23), the cavity (2311) has a first side wall (236) arranged away from the placement groove (111); the first side wall (236) being connected between the top wall (233) and the bottom wall (234) of the cavity (2311), and the first side wall (236) being connected to the partition portion (232).

3. The edge beam (23) for a battery tray (100) according to claim 2, wherein the cavity (2311) has a second side wall (237) close to the placement groove (111); the second side wall (237) being connected between the top wall (233) and the bottom wall (234) of the cavity (2311); the second side wall (237) being connected to the partition portion (232); and in the direction of the upper end to the lower end of the edge beam (23), the second side wall (237) inclining toward the placement groove (111).

4. The edge beam (23) for a battery tray (100) according to any of claims 1 to 3, wherein a cross-sectional shape of each sub-cavity (235) is a triangle or a trapezoid.

5. The edge beam (23) for a battery tray (100) according to any of claims 1 to 4, wherein the plurality of sub-cavities (235) comprise a first sub-cavity (2351) and a second sub-cavity (2352), the first sub-cavity (2351) being located on a side of the second sub-cavity (2352) close to the placement groove (111), a cross-sectional shape of the first sub-cavity (2351) being a triangle or a trapezoid, and/or a cross-sectional shape of the second sub-cavity (2352) being a trapezoid.

6. The edge beam (23) for a battery tray (100) according to claim 4, wherein the triangle is an equicrural triangle or an equilateral triangle.

7. The edge beam (23) for a battery tray (100) according to any of claims 1 to 6, wherein an included angle between the bottom wall (234) of the cavity (2311) and the partition portion (232) is β; and β satisfies a relation: 50° ≤ β ≤ 70°.

8. The edge beam (23) for a battery tray (100) according to claim 3, wherein an included angle between the second side wall (237) and the partition portion (232) is α; and α satisfies a relation: 50° ≤ α ≤ 70°.

9. The edge beam (23) for a battery tray (100) according to claim 3, wherein a lower end of the first side wall (236) is connected with a first connection portion (238) extending toward inside of the cavity (2311); the first connection portion (238) being located on a side of the bottom wall (234) of the cavity (2311) facing the top wall (233) of the cavity (2311); the first side wall (236) being connected to the bottom wall (234) of the cavity (2311) and the partition portion (232) through the first connection portion (238); and the first connection portion (238) being fixedly connected to the bottom wall (234) of the cavity (2311);
an upper end of the second side wall (237) is connected with a second connection portion (239) extending toward the inside of the cavity (2311); the second connection portion (239) being located on a side of the top wall (233) of the cavity (2311) facing the bottom wall (234) of the cavity (2311); the second side wall (237) being connected to the top wall (233) of the cavity (2311) and the partition portion (232) through the second connection portion (239); and the second connection portion (239) being fixedly connected to the top wall (233) of the cavity (2311); and
the top wall (233) of the cavity (2311), the bottom wall (234) of the cavity (2311), the first side wall (236), and the second side wall (237) jointly defining the cavity (2311).

10. The edge beam (23) for a battery tray (100) according to any of claims 1 to 9, wherein the edge beam (23) comprises a support portion (22); the support portion (22) is arranged on a side of the edge beam body (231) close to the placement groove (111); and the support portion (22) is configured to support the battery core (201).

11. The edge beam (23) for a battery tray (100) according to any of claims 1 to 10, wherein the edge beam (23) is formed in one piece.

12. A battery tray (100), comprising the edge beam (23) for a battery tray (100) according to any of claims 1 to 11.

13. The battery tray (100) according to claim 12, comprising:
a bottom tray plate (10), the bottom tray plate (10) comprising a bottom plate body (11) and an extension (12), the bottom plate body (11) defining the placement groove (111) configured to place a battery core (201), and the extension (12) extending along a circumferential edge of the bottom plate body (11); and
a side frame (20), the side frame (20) comprising a first edge beam (23), a second edge beam (23), a third edge beam (23), and a fourth edge beam (23), at least one of the first edge beam (23) and the second edge beam (23) being the edge beam (23), the first edge beam (23) and the second edge beam (23) being oppositely arranged in a first direction, the third edge beam (23) and the fourth edge beam (23) being oppositely arranged in a second direction, the first edge beam (23), the second edge beam (23), the third edge beam (23), and the fourth edge beam (23) being connected to form a mounting space (21), the bottom plate body (11) being mounted in the mounting space (21), in a height direction of the battery tray (100), the extension (12) being located above the side frame (20) and arranged on the side frame (20), the first edge beam (23) and/or the second edge beam (23) having a support portion (22), and the support portion (22) being configured to support the bottom tray plate (10), wherein one of the first direction and the second direction is a length direction of the battery tray (100), and the other thereof is a width direction of the battery tray (100).

14. A battery pack (200), comprising a battery core (201) and the battery tray (100) according to claim 12 or 13, the battery tray (100) having the placement groove (111), and the battery core (201) being placed in the placement groove (111).

15. A vehicle (2000), comprising the battery pack (200) according to claim 14.
